(19) Europäisches Patentamt / European Patent Office / Office européen des brevets

(11) **EP 1 803 618 B1**

(12) **EUROPÄISCHE PATENTSCHRIFT**

(45) Veröffentlichungstag und Bekanntmachung des Hinweises auf die Patenterteilung:
**08.09.2010   Patentblatt 2010/36**

(51) Int Cl.:
*B60S 1/04* *(2006.01)*     *B60S 1/08* *(2006.01)*

(21) Anmeldenummer: **06123225.2**

(22) Anmeldetag: **31.10.2006**

(54) **Verfahren zum Einstellen des Wischwinkels bei einer Wischanlage mit Reversiermotor für eine Fahrzeugscheibe**

Method of setting the wiping angle of a wiper device on a vehicle window

Procédé de réglage de l'angle d'essuyage d'un dispositif d'essuie-glace d'une vitre de véhicule

(84) Benannte Vertragsstaaten:
**CZ DE ES FR GB PL**

(30) Priorität: **28.12.2005   DE 102005062695**

(43) Veröffentlichungstag der Anmeldung:
**04.07.2007   Patentblatt 2007/27**

(73) Patentinhaber: **ROBERT BOSCH GMBH**
**70442 Stuttgart (DE)**

(72) Erfinder:
- **Grass, Ansgar**
  **77746 Schutterwald-Langhurst (DE)**
- **Mayer, Stephan**
  **77855 Achern (DE)**
- **Gabriel De Dias, Orlando**
  **76131 Karlsruhe (DE)**
- **Eberle, Goetz**
  **08880 Cubelles (ES)**

(56) Entgegenhaltungen:
**DE-A1- 19 732 520     US-A- 6 150 783**

**Beschreibung**

Stand der Technik

Die Erfindung betrifft ein Verfahren zum Einstellen des Wischwinkels bei einer Wischanlage mit einem durch eine Steuerung elektronisch geregeltem Reversiermotor, dessen Abtriebswelle über eine Motorkurbel eine Lagerwelle eines Wischers antreibt.

Scheibenwischanlagen zur Reinigung von Fahrzeugscheiben umfassen in der Regel einen Wischmotor, der dazu ausgebildet ist, ein Wischblatt relativ zu der Fahrzeugscheibe zu bewegen. Eine derartige Bewegung wird ausgehend von einer Abtriebswelle des Wischmotors über einen Wischarm auf das Wischblatt übertragen. Der Wischwinkel (WW) bei der Wischbewegung beträgt typischerweise um die 90 Grad und legt das Wischfeld bzw. die obere Wendelage des Wischers fest.

Möglichkeiten zur Einstellung oder Justierung des Wischwinkels werden in mehreren Zusammenhängen gesucht. Zunächst ist generell ein beliebig einstellbares Wischfeld erwünscht, um einen einzigen Typus einer Scheibenwischvorrichtung für unterschiedliche Anwendungsfälle und für verschiedene Kraftfahrzeugtypen verwendbar zu machen. Andererseits kann es auch wünschenswert sein, eine für den Einbau in ein Fahrzeug vorgesehene Wischanlage direkt nach dem Einbau relativ zum konkreten Fahrzeug einzustellen, da eine Einstellung des Wischmotors ab Werk, aufgrund der Fahrzeugtoleranzen, zu ungenau wäre. Außerdem wird manchmal daran gedacht, das Wischfeld nach längerem Betrieb im Kfz auch für Wartungszwecke einstellbar zu gestalten, etwa um den Einfluss von mechanischem Spiel, welches im Laufe der Zeit in Gelenken und mechanischen Übertragungselementen entsteht, ausgleichen zu können.

Die je nach der angezielten Anwendung angestrebten Eingriffsmöglichkeiten zur Einstellung des Wischwinkels sind natürlich durch die Wischanlage, insbesondere durch die Art des eingesetzten Wischantriebs, begrenzt. So ist bei rundlaufenden Motoren, bei denen der Wischwinkel ohne Elektronik, nur durch die kinematischen Beziehungen der Wischanlage erzielt wird, eine mechanische Veränderung am Getriebe erforderlich, um den Wischwinkel zu ändern. Dagegen ermöglicht der Einsatz von elektronisch geregelten Wischmotoren, die im Reversierbetrieb betrieben werden, eine geregelte Drehwinkelbewegung, die für die Wischanlage konstruktiv und funktionell neue Möglichkeiten eröffnet. Dabei lässt sich die Drehgeschwindigkeit und der Drehwinkel des Motors, also der Motorkurbelwinkel (MKW), vorgeben. Reversiermotoren bieten deshalb auch hinsichtlich der Einstellbarkeit des Wischwinkels neue Möglichkeiten.

Aus der DE 197 32 520 A1 ist ein Verfahren zum Einstellen des Wischfeldes und/oder der Umkehrposition bei einer Wischvorrichtung mit elektronisch geregeltem Reversiermotor bekannt, bei der in einem ersten Verfahrensschritt der Prozessor der Steuerung des Wischmotors in einen Lernmodus geschaltet wird, danach zumindest eine Wischbewegung ausgeführt wird, bis die Bewegung durch einen Anschlag begrenzt wird, und die Begrenzung als Umkehrposition gespeichert wird, so dass nach dem Umschalten in den Betriebsmodus das gewünschte Wischfeld mit der entsprechenden Umkehrposition beliebig oft abrufbar ist. Diese Programmierung der Wischanlage auf die Verwendung in einem bestimmten Fahrzeug hin lässt sich, wie weiter vorgeschlagen wird, insbesondere auch einfach in den Herstellungsprozess der Wischanlage einbinden. Dazu kann der Motor in einer Aufnahme angeordnet werden, sodann wird eine das Wischfeld definierende bzw. begrenzende Lehre angeordnet und der Lernmodus gestartet. Es besteht allerdings die Möglichkeit, nach dem Einbau der Wischanlage, insbesondere in einem höheren Betriebsalter, über den Lernmodus erneut das Wischfeld festzulegen.

Eine weitere Art des Einstellens des Wischwinkels ist bei der am Bandende erfolgenden Kontrolle der Winkelabweichung der hergestellten Wischanlagen gegenüber einem für die Fertigungscharge vorgegebenen Soll-Wischwinkel gegeben. Wischanlagen in modernen Fahrzeugen benötigen immer höhere Wischwinkel-Genauigkeiten, da dadurch der zu reinigende Bereich auf der Scheibe vergrößert werden kann. Die Wischblätter können dadurch näher an die A-Säule wischen. Die Genauigkeit des Wischwinkels einer Wischanlage ergibt sich derzeit im Wesentlichen aus der Genauigkeit der Einzelteile (z. B. der Länge der Motorkurbel, der Schwinge usw.) einerseits und den Montagetoleranzen in der Fertigung (z. B. Aufkurbelstellung der Motorkurbel) andererseits.

Gegenwärtig werden am Bandende alle Wischanlagen einzeln auf ihre Wischwinkel-Genauigkeit kontrolliert, wobei die Wischanlagen mit zu großer Abweichung vom Soll-Wischwinkel ausgesondert werden.

Im übrigen ist in der nicht vorveröffentlichten, älteren deutschen Patentanmeldung Az. 10 2005 013 591.9 im Zusammenhang mit einer zum Zwecke der Kollisionsvermeidung zweier gegenläufiger Wischer vorgeschlagenen Phasenverschiebung um einige Grad, die insbesondere durch eine absichtlich erzeugte Winkelabweichung der Motorkurbel realisierbar ist, die Möglichkeit beschrieben, die dadurch entstandene unerwünschte Abweichung des Wischwinkels in der oberen Wendelage mittels der Übertragungsfunktion ww = f (MKW) zu korrigieren. Es wird erwähnt, dass diese Korrektur durch eine einmalige elektronische Rekalibrierung am Bandende durchgeführt werden kann.

Aufgabe der Erfindung ist die Schaffung einer einfachen Einstellmöglichkeit des Wischwinkels, die insbesondere bei der Herstellung der Wischanlage eine Verbesserung der Abliefergenauigkeit des Wischwinkels von Wischanlagen sowie eine Reduzierung von Ausschussmengen erlaubt.

Diese Aufgabe wird erfindungsgemäß durch ein Verfahren zum Einstellen des Wischwinkels bei einer Wischanlage gemäß Anspruch 1 gelöst. Vorteilhafte Ausgestaltungen des Verfahrens sind in den Unteransprüchen gekennzeichnet.

Das erfindungsgemäße Verfahren zum Einstellen des Wischwinkels bei einer Wischanlage mit einem durch eine elektronische Steuerung geregeltem Reversiermotor, dessen Abtriebswelle über eine Motorkurbel eine Lagerwelle eines Wischers antreibt und in dessen Steuerung ein einem vorgebbaren Soll-Wischwinkel nominell entsprechender Motorkurbelwinkel gespeichert ist, sieht vor, dass der Ist-Wischwinkel an der Lagerwelle oder am Wischer mit einem Sensor erfasst und an einen externen Prüfrechner übermittelt wird, der daraus und mittels einer vorgegebenen Übertragungskennlinie zwischen Motorkurbelwinkel und zugehörigem Wischwinkel einen dem Soll-Wischwinkel tatsächlich entsprechenden, korrigierten Motorkurbelwinkel errechnet, der dann an die Steuerung übermittelt und dort anstelle des bisherigen Motorkurbelwinkels abgespeichert wird. Die Erfindung beruht also auf der Korrektur mittels der Übertragungsfunktion ww = f (MKW) einerseits und dem Einsatz eines externen Prüfstands andererseits. Dadurch gelingt es, den Motorkurbelwinkel so zu verändern, dass an den Lagerwellen der vorgegebene Soll-Wischwinkel erzielt wird. Die Steuerung, insbesondere der Prozessor der Wischanlage, benötigt für das erfindungsgemäße Verfahren keinerlei Modifizierung.

Eine besonders vorteilhafte Ausgestaltung dieses Verfahrens besteht darin, dass bei der Herstellung der Wischanlage am Bandende ein signalgebendes Sensorelement provisorisch an der Lagerwelle befestigt wird, danach ein Wischwinkelabgleich durch Einstellen des Wischwinkels auf den für die gegebene Fertigungscharge vorgegebenen Soll-Wischwinkel durchgeführt und anschließend das Sensorelement wieder entfernt wird. Durch den vollständigen, d. h. bei jeder einzelnen gefertigten Wischanlage möglichen Wischwinkelabgleich vor Ablieferung der kompletten Wischanlage kann diese mit einer höheren Genauigkeit des Wischwinkels ausgeliefert werden. Dadurch können die Wischhebel näher an die A-Säule des Fahrzeugs geparkt werden. Das Wischfeld im Fahrzeug wird vergrößert. Zudem ist die Ablieferqualität der Wischanlage nicht mehr abhängig von Einzeltoleranzen der verbauten Einzelteile, sondern kann abgeglichen werden. Ferner wirken sich Montagetoleranzen in der Fertigung nicht mehr so stark aus. Der Montageprozess wird robuster bzw. unkritischer. Andererseits kann die gewonnene Genauigkeitsverbesserung auch zur Vergrößerung der erlaubten Einzelteiltoleranzen genutzt werden.

Vorteilhafterweise wird das signalgebende Sensorelement vor dem Wischwinkelabgleich auf die Lagerwelle, an der noch kein Wischarm befestigt ist, aufgesteckt und nach dem Abgleich wieder entfernt. Es ist jedoch auch möglich, das Sensorelement indirekt an der Lagerwelle zu befestigen, beispielsweise indem es an einem Wischarm oder einer Wischarm-Attrappe befestigt wird, die selbst auf die Lagerwelle aufgesteckt wird. In jedem Fall ist es am einfachsten, wenn der Ist-Wischwinkel durch einen Drehwinkelsensor erfasst wird.

Die Übertragungskennlinie braucht im Prüfrechner nur in Form eines einzelnen Wertes, der die Steigung der Übertragungskennlinie in der nominellen oberen Wendelage des Wischers wiedergibt, abgelegt sein. Dies hat den Vorteil, dass viele verschiedene Typen von Wischanlagen ohne großen Speicherbedarf im gleichen Prüfrechner abgespeichert werden können. Der Prüfrechner kann dann jeweils mit Hilfe des Ist- und des Soll-Wischwinkels sowie des Steigungswertes den korrigierten Motorkurbelwinkel in linearer Näherung errechnen, wozu eine relativ geringe Rechenkapazität ausreicht.

Eine besonders günstige Verfahrensführung resultiert, wenn der Prüfrechner selbst ein Wischkommando an die Wischanlage sendet, das die Wischanlage für einen oder mehrere Wischzyklen in Betrieb setzt, wobei die Einstellung des Wischwinkels während dieses kurzen Prüflaufs vorgenommen wird. Zur Überprüfung, ob der Soll-Wischwinkel erfolgreich eingestellt wurde, kann nochmals ein Wischkommando vom Prüfrechner an die Wischanlage gesendet und der Ist-Wischwinkel im neuen Prüflauf gemessen werden. Im Falle einer Nicht-Übereinstimmung zwischen Soll- und Ist-Wischwinkel kann entweder unmittelbar, im laufenden Prüflauf, ein Wischwinkelabgleich mittels der Übertragungskennlinie oder, nach dem Prüflauf, die Initiierung eines neuen Prüflaufs zur Einstellung des Wischwinkels erfolgen.

Die Erfindung wird nachfolgend an Ausführungsbeispielen anhand der Zeichnung näher erläutert. Es zeigt

Figur 1 eine Seitenansicht einer an sich bekannten Wischanlage, bei der der Wischwinkel erfindungsgemäß eingestellt werden soll,

Figur 2 ein Diagramm mit dem Verlauf der abhängig von Einzelteil- und Montagetoleranzen möglichen Übertragungsfunktionen der Wischanlage gemäß Figur 1,

Figur 3, in vergrößertem Maßstab, einen Ausschnitt des Diagramms gemäß Figur 2 im Bereich des Reversierwinkels zur Verdeutlichung des erfindungsgemäßen Abgleichs,

Figur 4 ein Blockdiagramm zur Verdeutlichung des Zusammenwirkens einzelner Elemente und Abläufe im erfindungsgemäßen Verfahren.

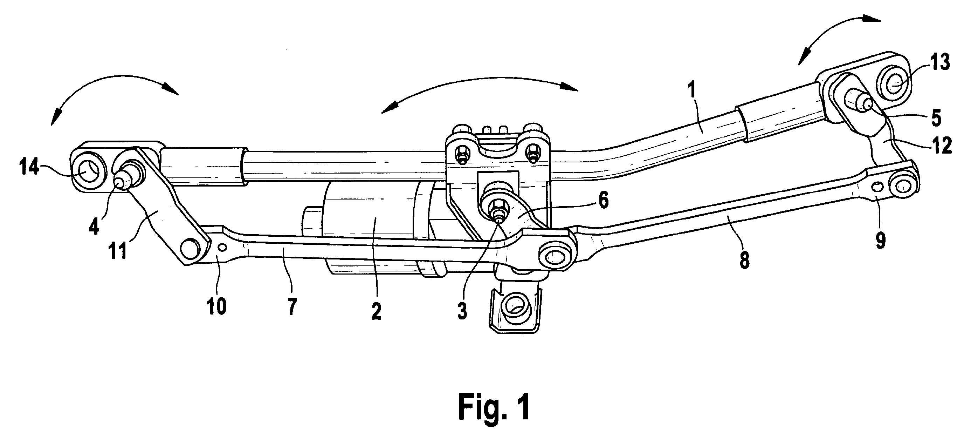

Figur 1 zeigt - im zusammengebauten Zustand, jedoch noch ohne den Wischarmen, die üblicherweise erst nach Einbau der Wischanlage in ein Fahrzeug montiert werden - eine Wischanlage mit elektronisch geregeltem Reversierantrieb. Erkennbar ist ein stangenartiger Tragkörper 1, an dem ein Wischermotor 2 angeordnet ist, dessen hier nicht sichtbare (Steuer) elektronik beispielsweise an der Innenseite eines Gehäusedeckels des Motors 2 angeordnet ist. Der Motor 2 verfügt über eine Abtriebswelle 3, die die Lagerwellen 4 und 5, auf denen später die Wischarme befestigt werden, nicht direkt, sondern über ein Kurbelgetriebe (Motorkurbel 6) und ein Koppelgestänge mit den Gelenkstangen 7 und 8 antreibt. Die gegenüberliegenden Enden 9 und 10 des Koppelgestänges 7 und 8 sind jeweils gelenkig mit einer Schwinge 11 und 12 verbunden, die wiederum mit der jeweiligen Lagerwelle 4 bzw. 5 starr gekoppelt ist. Die Wischanlage kann mittels der Verbindungspunkte 13 und 14 unterhalb einer Windschutzscheibe (nicht dargestellt) in einer Fahrzeugkarosserie befestigt werden.

Im Betrieb vollführen, wie in Figur 1 angedeutet, die Abtriebswelle 3 des Reversiermotors 2 und die mit der Abtriebswelle 3 starr verbundene Motorkurbel 6 eine Drehwinkelbewegung von etwa 180 Grad. Der maximale Motorkurbelwinkel ist in der Steuerung abgelegt. Wird dieser so genannte Reversierwinkel erreicht, so kehrt die Steuerung die Drehrichtung des Motors 2 um, so dass auch die Motorkurbel 6 ihre Drehrichtung ändert. Über die beiden Gelenkstangen 7 und 8, die jeweils über ein Ende mit dem Ende der Motorkurbel 6 gelenkig verbunden sind, kann die reversierende Drehbewegung auf die Lagerwellen 4 und 5 und damit in eine pendelnde Bewegung der Wischer übertragen werden.

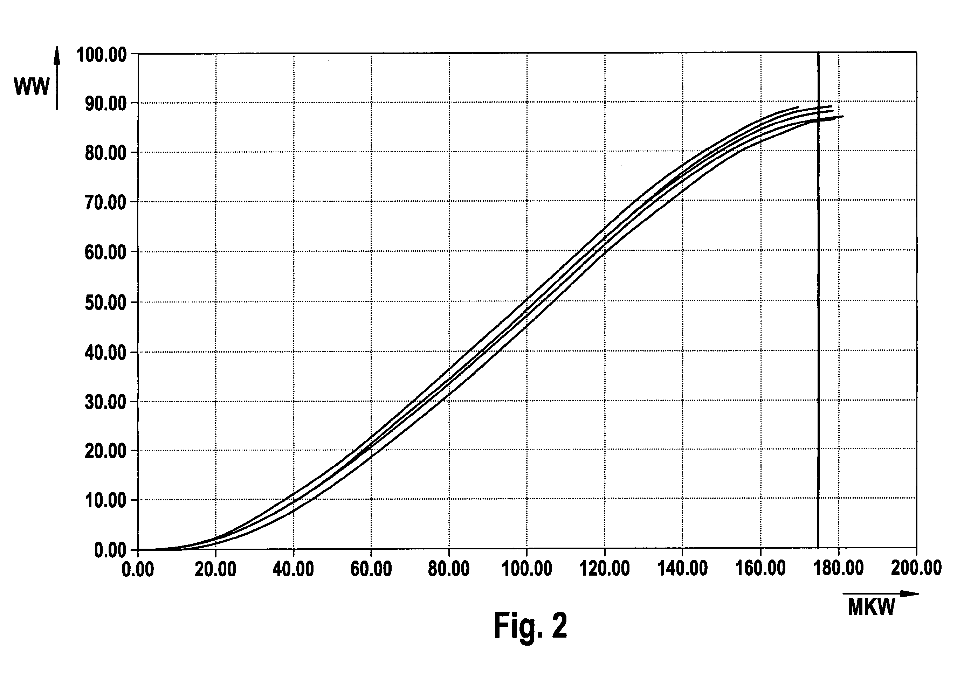

In Figur 2 ist der Einfluss von Gestängetoleranzen auf die Übertragungsfunktion ww = f (MKW) dargestellt. Die Übertragungsfunktion (Getriebefunktion) zeigt insgesamt den für ein ungleichmäßig übersetzendes Kurbelgetriebe typischen Verlauf, bei dem das Getriebe nahe der Deck- und der Strecklage der Motorkurbel 6 relativ zu den Gelenkstangen 7 und 8 mit wesentlich geringerer Übersetzung als im dazwischenliegenden MKW-Bereich arbeitet. Die Übertragungsfunktion des Kurbelgetriebes, die die Abhängigkeit des durch die Bewegung der Lagerwelle gegebenen Wischwinkels vom Motorkurbelwinkel ausdrückt, flacht sich also an den Umkehrlagen stark ab. Dargestellt in Figur 2 ist eine Kurvenschar möglicher Übertragungsfunktionen einer Wischanlage in Abhängigkeit von den variierten Gestängetoleranzen, das heißt, den Toleranzen der Einzelbauteile bzw. der Montage. Offensichtlich liegt die Ungenauigkeit (d. h. die Wischwinkel-Abweichungen von zusammengebauten, noch nicht abgeglichenen Wischanlagen untereinander) im Bereich von einigen Grad Wischwinkel, so dass die zunehmend engeren Kundenvorgaben bisher nur durch relativ hohe Ausschussmengen eingehalten werden können.

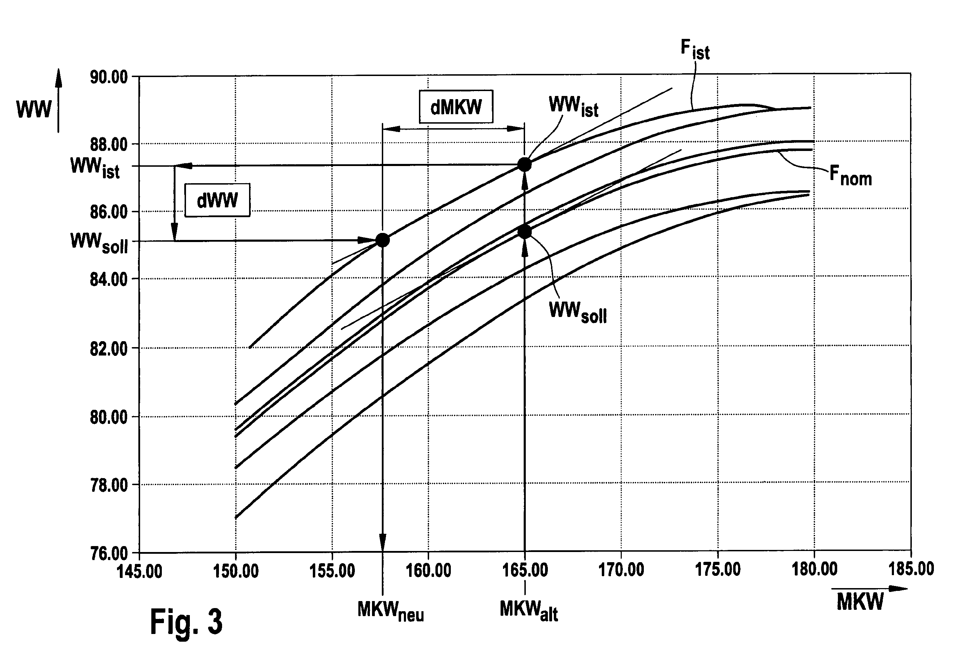

Figur 3 zeigt ein Ausführungsbeispiel zur Berechnung eines korrigierten Motorkurbelwinkels. Im Beispiel ist ein Soll-Wischwinkel von ca. 85 Grad angenommen. Gemäß der nominellen Übertragungsfunktion $F_{ist}$ entspricht dies einem nominellen $MKW_{alt} = MKW_{nom}$ von 165 Grad. Dieser Wert ist zunächst in der Steuerung abgespeichert und wird im Prüfbetrieb als geltender Reversierwinkel verwirklicht. Im Prüfstand wird dann der bei MKW = 165 Grad tatsächlich auftretende Ist-Wischwinkel gemessen, hier: ca. 87 Grad. Der Ist-Wischwinkel liegt also um etwa zwei Grad zu hoch, das heißt dWW = 2 Grad, und muss in Richtung des Soll-Wischwinkels korrigiert werden. Der Hintergrund ist, dass die im Beispiel vorliegende Wischanlage auf Grund ihrer konkreten Gestängetoleranzen nicht durch die nominelle Übertragungskennlinie, sondern durch die in der Kurvenschar oberhalb von $F_{nom}$ gelegene $F_{Ist}$ charakterisiert ist. Gemäß dieser Kennlinie $F_{Ist}$ wird aber der gewünschte Soll-Wischwinkel von 85 Grad bereits bei einem $MKW_{neu}$ von 157,5 Grad erreicht. Der nominelle $MKW_{alt}$ muss also in diesem Fall um ca. 7,5 Grad (dMKW = 7,5 Grad) reduziert werden, damit - trotz der gegebenen Gestängetoleranzen - der 'richtige' Soll-Wischwinkel erzielt wird.

Zur Durchführung dieses Abgleichs wird zunächst die Wischanlage zusammengebaut und der Wischmotor 2 wird in einem Prüfstand, der einen Prüfrechner umfasst, kontaktiert. Dann sendet der Prüfstand über eine serielle Schnittstelle ein Wischkommando an den Wischmotor 2. Die Wischanlage macht auf Grund des erhaltenen Wischkommandos ein oder mehrere Wischzyklen. Dabei wird der Wischwinkel an der Wischerlagerwelle 4 oder 5 mittels eines Drehwinkelsensors überwacht. Falls die Wischanlage im Rahmen ihrer Steuerung/Regelung über Sensormittel zur Positionsfeststellung der Abtriebswelle 3 des Motors 2 verfügt, so können diese Mittel nicht im Sinne des erfindungsgemäß verwendeten Drehwinkelsensors verwendet werden, da die Ursache der auszugleichenden Abweichungen von den Sollwerten, nämlich die Gestängetoleranzen, erst im auf die Abtriebswelle 3 folgenden Antriebsstrang liegt, so dass die Istwerte auch erst ab der Lagerwelle 4 bzw. 5 feststellbar sind. Nachdem der Ist-Wischwinkel feststeht, wird aus diesem und dem Soll-Wischwinkel anhand der Übertragungsfunktion F der Korrekturwert des Motorkurbelwinkels gemäß den bei Figur 3 beschriebenen Grundsätzen berechnet. Der Korrekturwert des Motorkurbelwinkels wird danach in der Motorsteuerung abgelegt. Damit hat die Wischanlage einen Abgleich erfahren, d. h., die Wischanlage erfüllt nunmehr trotz relativ hoher individueller Gestängetoleranzen mit hoher Genauigkeit den gewünschten Ist-Wischwinkel.

Zur Überprüfung, ob der Abgleich erfolgreich durchgeführt wurde, kann anschließend nochmals ein Wischkommando vom Prüfrechner an die Wischanlage abgesetzt und über den Drehwinkelsensor der Ist-Wischwinkel gemessen werden. War der Abgleich nicht erfolgreich, kann die Wischanlage die gesamte Prüfprozedur einschließlich der elektronischen Nachjustierung nochmals durchlaufen.

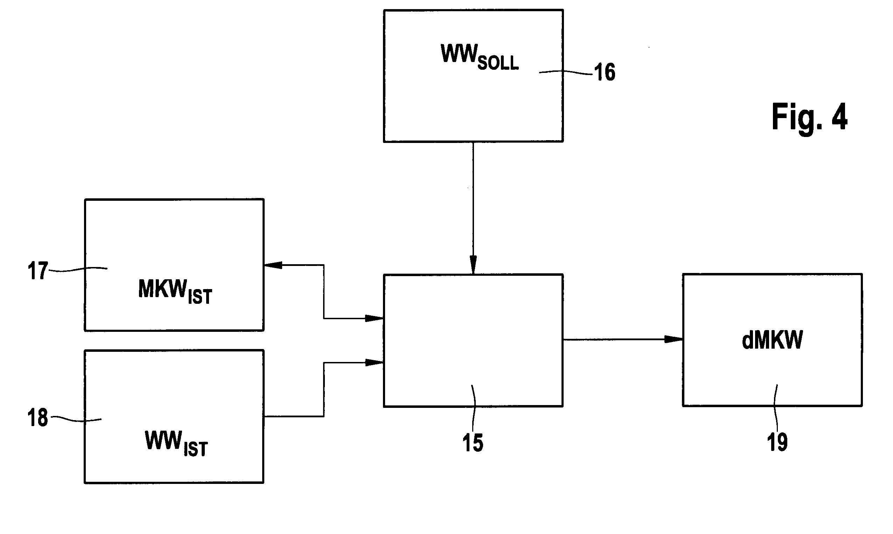

Figur 4 verdeutlicht das Zusammenwirken wichtiger Elemente und Abläufe bei einem vereinfachten Ausführungsbeispiel. Dabei werden dem Prüfrechner 15 Eingangsgrößen 16 zugänglich gemacht, die insbesondere den Soll-Wischwinkel und, als minimale Repräsentation der nominellen Übertragungskennlinie des abzugleichenden Wischanlagen-Typs, die nominelle Steigung $m_{nomOWL}$ in der oberen Wendelage umfassen. Die Steuerung 17 des Wischermotors 2 übermittelt an den Prüfrechner 15 den aktuell geltenden Reversierwinkel, ausgedrückt durch $MKW_{Ist}$. Der Winkelsensor 18 übermittelt den aktuellen, im Prüflauf gemessenen Wert $WW_{Ist}$. In linearer Näherung ist die Steigung durch

$$m_{OWLnom} = dWW_{OWLnom} / dMKW_{OWLnom}$$

gegeben, so dass sich die erforderliche Korrektur 19 (dMKW) gemäß

$$dMKW = (WW_{Soll} - WW_{Ist}) / m_{OWLnom}$$

berechnet. Daraus bestimmt sich der korrigierte $MKW_{neu}$ zu

$$MKW_{neu} = MKW_{alt} - dMKW.$$

Dieser Wert wird vom Prüfrechner 15 an die Motorsteuerung 17 zurückübermittelt und dort anstelle des bisherigen Motorkurbelwinkels $MKW_{alt}$ abgespeichert. Zum Abgleich wird also nicht $F_{Ist}$, sondern nur $F_{nom}$, repräsentiert durch $m_{OWLnom}$, benötigt, vgl. Figur 3.

## Patentansprüche

1. Verfahren zum Einstellen des Wischwinkels bei einer Wischanlage mit einem durch eine Steuerung (17) elektronisch geregeltem Reversiermotor (2), dessen Abtriebswelle (3) über eine Motorkurbel (6) eine Lagerwelle (4, 5) eines Wischers antreibt und in dessen Steuerung (17) ein einem vorgebbaren Soll-Wischwinkel nominell entsprechender Motorkurbelwinkel gespeichert ist, bei dem der Ist-Wischwinkel an der Lagerwelle (4, 5) oder am Wischer mit einem Sensor (18) erfasst und an einen externen Prüfrechner (15) übermittelt wird, der daraus und mittels einer vorgegebenen Übertragungskennlinie (F) zwischen Motorkurbelwinkel und zugehörigem Wischwinkel einen dem Soll-Wischwinkel tatsächlich entsprechenden, korrigierten Motorkurbelwinkel errechnet, der an die Steuerung (17) übermittelt und dort anstelle des bisherigen Motorkurbelwinkels abgespeichert wird.

2. Verfahren nach Anspruch 1, bei dem bei der Herstellung der Wischanlage am Bandende ein signalgebendes Sensorelement (18) provisorisch an der Lagerwelle (4, 5) befestigt wird, danach ein Wischwinkelabgleich durch Einstellen des Wischwinkels auf den für die gegebene Fertigungscharge vorgegebenen Soll-Wischwinkel durchgeführt und anschließend das Sensorelement (18) wieder entfernt wird.

3. Verfahren nach Anspruch 2, bei dem das signalgebende Sensorelement (18) vor dem Wischwinkelabgleich auf die Lagerwelle (4, 5), an der noch kein Wischarm befestigt ist, aufgesteckt und nach dem Abgleich wieder entfernt wird.

4. Verfahren nach einem der Ansprüche 1 bis 3, bei dem der Ist-Wischwinkel durch einen Drehwinkelsensor (18) erfasst wird.

5. Verfahren nach einem der Ansprüche 1 bis 4, bei dem die Übertragungskennlinie F im Prüfrechner (15) nur in Form eines einzelnen Wertes, der die Steigung m der Übertragungskennlinie $F_{nom}$ in der nominellen oberen Wendelage des Wischers wiedergibt, abgelegt ist, und bei dem der Prüfrechner (15) mit Hilfe des Ist- und des Soll-Wischwinkels sowie des Steigungswertes m den korrigierten Motorkurbelwinkel in linearer Näherung errechnet.

6. Verfahren nach einem der Ansprüche 1 bis 5, bei dem der Prüfrechner (15) ein Wischkommando an die Wischanlage sendet, das die Wischanlage für einen oder mehrere Wischzyklen in Betrieb setzt, wobei die Einstellung des Wischwinkels während dieses Prüflaufs vorgenommen wird.

7. Verfahren nach Anspruch 6, bei dem zur Überprüfung, ob der Soll-Wischwinkel erfolgreich eingestellt wurde, nochmals ein Wischkommando vom Prüfrechner (15) an die Wischanlage gesendet und der Ist-Wischwinkel im neuen Prüflauf gemessen wird.

8. Verfahren nach Anspruch 7, bei dem im Falle einer Nicht-Übereinstimmung zwischen Soll- und Ist-Wischwinkel entweder unmittelbar, im laufenden Prüflauf, ein Wischwinkelabgleich mittels der Übertragungskennlinie F oder, nach dem Prüflauf, die Initiierung eines neuen Prüflaufs zur Einstellung des Wischwinkels erfolgt.

**Claims**

1. Method for adjusting the wiping angle in a wiping system having a reversing motor (2) which is electronically controlled by a controller (17), the output shaft (3) of the said reversing motor driving a bearing shaft (4, 5) of a wiper by means of a motor crank (6), and a motor crank angle which nominally corresponds to a predefinable setpoint wiping angle being stored in the controller (17) of the said reversing motor, in which method the actual wiping angle is detected at the bearing shaft (4, 5) or at the wiper by a sensor (18) and is transmitted to an external test computer (15) which calculates a corrected motor crank angle, which actually corresponds to the setpoint wiping angle, from the said actual wiping angle and by means of a predefined transmission characteristic curve (F) between the motor crank angle and the associated wiping angle, the said corrected motor crank angle being transmitted to the controller (17) and being stored there instead of the previous motor crank angle.

2. Method according to Claim 1, in which, when the wiping system is produced at the end of a production line, a signal-emitting sensor element (18) is temporarily attached to the bearing shaft (4, 5), the wiping angle is then compensated by adjusting the wiping angle to the setpoint wiping angle which is predefined for the given manufacturing batch, and subsequently the sensor element (18) is removed again.

3. Method according to Claim 2, in which the signal-emitting sensor element (18) is fitted on the bearing shaft (4, 5), to which a wiper arm has not yet been attached, before the wiping angle is compensated, and removed again after the compensation.

4. Method according to one of Claims 1 to 3, in which the actual wiping angle is detected by a rotary angle sensor (18).

5. Method according to one of Claims 1 to 4, in which the transmission characteristic curve F in the test computer (15) is stored only in the form of an individual value which reflects the gradient m of the transmission characteristic curve $F_{nom}$ in the nominal upper turning position of the wiper, and in which the test computer (15) calculates the corrected motor crank angle to a linear approximation with the aid of the actual and the setpoint wiping angle and also the gradient value m.

6. Method according to one of Claims 1 to 5, in which the test computer (15) sends a wiping command to the wiping system, this wiping command activating the wiping system for one or more wiping cycles, with the wiping angle being adjusted during this test run.

7. Method according to Claim 6, in which, in order to check whether the setpoint wiping angle has been successfully adjusted, a wiping command is once again sent from the test computer (15) to the wiping system, and the actual wiping angle is measured in the new test run.

8. Method according to Claim 7, in which, if the setpoint and actual wiping angles do not correspond, either the wiping angle is compensated immediately, in the current test run, by means of the transmission characteristic curve F, or a new test run for adjusting the wiping angle is initiated after the test run.

**Revendications**

1. Procédé de réglage de l'angle de balayage d'une installation d'essuie-glace qui présente un moteur réversible (2) réglé électroniquement par une commande (17) et dont l'arbre d'entraînement (3) entraîne un arbre de palier (4, 5) d'un balai d'essuie-glace par l'intermédiaire d'une manivelle (6) de moteur,
un angle de manivelle de moteur qui correspond nominalement à un angle prédéterminable de balayage de consigne étant conservé en mémoire dans la commande (17),
l'angle de balayage effectif étant détecté sur l'arbre de palier (4, 5) ou sur le balai d'essuie-glace à l'aide d'un détecteur (18) et étant transmis à un calculateur externe de vérification (15) qui, à partir de là et au moyen d'une ligne caractéristique prédéterminée de conversion (F) entre l'angle de manivelle de moteur et l'angle de balayage associé, calcule un angle corrigé de manivelle de moteur qui correspond effectivement à l'angle de balayage de consigne et le transmet à la commande (17) où il est conservé en mémoire au lieu de l'angle de manivelle de moteur prévalant jusque là.

2.  Procédé selon la revendication 1, dans lequel lors de la fabrication de l'installation d'essuie-glace, un élément de détection (18) émettant un signal est fixé provisoirement sur l'arbre de palier (4, 5) à la fin de la chaîne de fabrication, une compensation de l'angle de balayage est réalisée en réglant l'angle de balayage sur l'angle de balayage de consigne prédéterminé pour le lot de fabrication donné, l'élément de détection (18) étant ensuite enlevé.

3.  Procédé selon la revendication 2, dans lequel avant la compensation de l'angle de balayage, l'élément de détection (18) émettant un signal est enfiché sur l'arbre de palier (4, 5) sur lequel aucun balai d'essuie-glace n'est encore fixé, et est enlevé après la compensation.

4.  Procédé selon l'une des revendications 1 à 3, dans lequel l'angle de balayage effectif est détecté par un détecteur (18) d'angle de rotation.

5.  Procédé selon l'une des revendications 1 à 4, dans lequel la ligne caractéristique de transmission F n'est conservée dans le calculateur de vérification (15) que sous la forme d'une unique valeur qui représente la pente m de la ligne caractéristique de transmission $F_{nom}$ lorsque le balai d'essuie-glace est en position nominale haute de rotation, et dans lequel le calculateur de vérification (15) calcule l'angle corrigé de manivelle de moteur par approximation linéaire à l'aide de l'angle effectif et de l'angle de consigne de balayage ainsi que de la valeur m de la pente.

6.  Procédé selon l'une des revendications 1 à 5, dans lequel le calculateur de vérification (15) envoie à l'installation d'essuie-glace une commande de balayage qui met l'installation d'essuie-glace en fonctionnement pour un ou plusieurs cycles de balayage, le réglage de l'angle de balayage étant réalisé pendant cette passe de vérification.

7.  Procédé selon la revendication 6, dans lequel pour vérifier si l'angle de balayage de consigne a été réglé avec succès, une commande de balayage est encore une fois envoyée par le calculateur de vérification (15) à l'installation d'essuie-glace et l'angle de balayage effectif est mesuré dans une nouvelle passe de vérification.

8.  Procédé selon la revendication 7, dans lequel au cas où l'angle de balayage de consigne et l'angle de balayage effectif ne correspondent pas, une compensation d'angle de balayage a lieu au moyen de la ligne caractéristique de transmission F pendant la passe de vérification en cours ou une nouvelle passe de vérification destinée à régler l'angle de balayage est lancée après la passe de vérification.

Fig. 1

Fig. 2

EP 1 803 618 B1

Fig. 3

Fig. 4

WW$_{SOLL}$ — 16

dMKW — 19

15

MKW$_{IST}$ — 17

WW$_{IST}$ — 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19732520 A1
- DE 102005013591